# EUROPEAN PATENT APPLICATION

(11) **EP 4 815 479 A1**
(43) Date of publication of application: **30.09.2026**
(21) Application number: 26158269.6
(22) Date of filing: 12.02.2026
(51) Int. Cl.: H04N 23/60, H04N 23/65, H04N 23/66, H04N 23/663, H04B 10/116, H04B 10/50

(54) **DATA TRANSMISSION METHOD, ELECTRONIC DEVICE, EXTERNAL DEVICE, PROGRAM PRODUCT, AND MEDIUM**

(30) Priority: 28.03.2025 CN 202510390024
(71) Applicant: Beijing Xiaomi Mobile Software Co., Ltd., Beijing 100085 (CN)
(72) Inventor: LIANG, Lei, Beijing, 100085 (CN)
(74) Representative: Dehns Germany Partnerschaft mbB

(57) **Abstract**

The present invention provides a data transmission method, an electronic device (10), an external device (20), a program product, and a medium. The electronic device (10) includes a processor (11) and a first communication module (12). The processor (11) is electrically connected to the first communication module (12). The processor (11) is configured to control, after determining that the external device (20) interfaces with the electronic device (10), transmission of image data between the first communication module (12) and a second communication module (22) of the external device (20), the image data being collected by an image sensor (27) inside the external device (20).

## Description

### TECHNICAL FIELD

The present invention relates to the field of communication technology, in particular, to a data transmission method, an electronic device, an external device, a program product, and a medium.

### BACKGROUND

Electronic devices such as smartphones or tablets are typically equipped with a camera function, which allows for capturing images or recording videos. In consideration that the limitation of a size of the electronic device, the imaging performance of an image sensor of the camera inside the electronic device is limited, and the imaging performance is inferior to that of a Single-Lens Reflex camera.

### SUMMARY

The present invention provides a data transmission method, an electronic device, an external device, a program product, and a medium, in order to solve the above technical problems.

According to a first aspect of the present invention, an electronic device is provided.

The electronic device includes a processor and a first communication module, the processor being electrically connected to the first communication module.

The processor is configured to control, after determining that an external device detachably interfaces with the electronic device, transmission of image data between the first communication module and a second communication module of the external device, the image data being collected by an image sensor inside the external device.

In some embodiments, the first communication module includes an optical signal port, the optical signal port includes a lens and a photosensitive device, the lens is configured to adjust an input ray into a parallel optical signal, and the photosensitive device is configured to convert the parallel optical signal into an input current signal.

In some embodiments, the first communication module further includes a signal conversion unit, the signal conversion unit is electrically connected to the optical signal port, the signal conversion unit is configured to convert the input current signal output from the optical signal port, and send a converted signal to the processor, and the processor is configured to obtain the image data based on the converted signal.

In some embodiments, the signal conversion unit includes a first deserializer, the first deserializer is electrically connected to the optical signal port and the processor respectively, and the first deserializer is configured to deserialize the input current signal and transmit the converted signal obtained to the processor.

In some embodiments, the first deserializer is electrically connected to the processor through a data bus, and the data bus includes one of an I2C bus, an MIPI bus, an SPMI bus, and an SPI bus.

In some embodiments, the first deserializer is electrically connected to the processor through a high-speed transmission device, and the high-speed transmission device includes one of a DDR device and a UFS device.

In some embodiments, the signal conversion unit includes an amplifier, and the amplifier is electrically connected to the optical signal port and the processor respectively; the amplifier is configured to amplify the input current signal and transmit an amplified signal to the processor; and the processor is configured to obtain the image data based on the amplified signal.

In some embodiments, the signal conversion unit includes an amplifier and a second deserializer, the amplifier is electrically connected to the optical signal port and the second deserializer respectively, and the second deserializer is electrically connected to the processor; the amplifier is configured to amplify the input current signal, and transmit the amplified signal to the second deserializer; the second deserializer is configured to deserialize the amplified signal and transmit the converted signal obtained from deserializing to the processor; and the processor is configured to obtain the image data based on the converted signal.

In some embodiments, the electronic device further includes a power management module configured to supply power to the signal conversion unit and the processor.

In some embodiments, the electronic device further includes a battery module and a power supply module, wherein the battery module is electrically connected to the power supply module, and the power supply module is configured to supply power to the external device.

In some embodiments, the power supply module includes a wireless module, and the wireless module is configured to supply power to the external device wirelessly.

In some embodiments, the power supply module includes a power interface, the power interface is electrically connected to the battery module, and the power interface is configured to supply power to the external device after interfacing with a power interface of the external device.

In some embodiments, the electronic device further includes a signal transmission module electrically connected to the processor; the processor is configured to generate a control signal after determining that an external device interfaces with the electronic device, and send the control signal to the signal transmission module; and the signal transmission module is configured to send the control signal to a signal transmission module of the external device.

In some embodiments, the signal transmission module includes a Bluetooth module, a Wi-Fi module, or an NFC module.

In some embodiments, the signal transmission module includes a communication interface, and the communication interface is configured to transmit the control signal after interfacing with a communication interface of the external device.

In some embodiments, the electronic device further includes an interfacing detection module, wherein the interfacing detection module is electrically connected to the processor, and configured to determine whether the external device successfully interfaces with the electronic device.

In some embodiments, the interfacing detection module includes a Hall device, the Hall device is configured to generate an interfacing signal after the external device successfully interfaces with the electronic device, and send the interfacing signal to the processor, and the processor is configured to generate the control signal after determining that the interfacing signal is received.

In some embodiments, the interfacing detection module includes a physical button electrically connected to the processor, the physical button is configured to generate a trigger signal after the external device successfully interfaces with the electronic device, and send the trigger signal to the processor, and the processor is configured to generate a control signal after determining that the trigger signal is received.

According to a second aspect of the present invention, an external device is provided. The external device includes a main controller, an image sensor, and a second communication module, wherein the main controller is electrically connected to the image sensor and the second communication module respectively.

The image sensor is configured to collect image data and send the image data to the main controller.

The main controller is configured to control transmission of the image data between the second communication module and a first communication module of an electronic device.

In some embodiments, the second communication module includes an optical signal port, the optical signal port includes a lens and a photoelectric device, the photoelectric device is configured to convert a driving signal into an optical signal, and the lens is configured to adjust the optical signal input to the lens into a parallel optical signal.

In some embodiments, the second communication module further includes a signal conversion unit, the signal conversion unit is electrically connected to the optical signal port, and the signal conversion unit is configured to convert the image data output by the main controller into the driving signal and send the driving signal to the optical signal port.

In some embodiments, the signal conversion unit includes a first serializer, the first serializer is electrically connected to the optical signal port and the main controller respectively; the main controller is configured to send the image data to the first serializer; and the first serializer is configured to convert the image data into the driving signal.

In some embodiments, the first serializer is electrically connected to the main controller through a data bus, and the data bus includes one of an I2C bus, an MIPI bus, an SPMI bus, and an SPI bus.

In some embodiments, the first serializer is electrically connected to the main controller through a high-speed transmission device, and the high-speed transmission device includes one of a DDR device and a UFS device.

In some embodiments, the signal conversion unit includes a driver, the driver is electrically connected to the optical signal port and the main controller respectively; and the driver is configured to convert the image data into the driving signal and transmit the driving signal to the optical signal port.

In some embodiments, the signal conversion unit includes a driver and a second serializer, the driver is electrically connected to the optical signal port and the second serializer respectively, and second serializer is electrically connected to the main controller; the main controller is configured to send the image data to the second serializer; the second serializer is configured to convert the image data into a serial signal and send the serial signal to the driver; and the driver is configured to convert the serial signal into the driving signal.

In some embodiments, the external device further includes a power management module configured to supply power to various components inside the external device.

In some embodiments, the external device further includes a power module, the power module is configured to obtain electrical energy from the electronic device after interfacing with the electronic device.

In some embodiments, the power module includes a wireless module, and the wireless module is configured to obtain the electrical energy from the electronic device wirelessly.

In some embodiments, the power module includes a power interface, the power interface is electrically connected to a power management module, and the power interface is configured to obtain the electrical energy after interfacing with a power interface of the electronic device.

In some embodiments, the external device further includes a signal transmission module electrically connected to the main controller; the signal transmission module is configured to obtain a control signal and send the control signal to the main controller; and the main controller is configured to control the external device and/or configure the external device based on the control signal.

In some embodiments, the signal transmission module includes a Bluetooth module, a Wi-Fi module, or an NFC module.

In some embodiments, the signal transmission module includes a communication interface, and the communication interface is configured to transmit the control signal after interfacing with a communication interface of the electronic device.

In some embodiments, the external device further includes an interfacing match component, wherein the interfacing match component is configured to pair with an interfacing detection module inside the electronic device, and configured to determine whether the external device successfully interfaces with the external device.

In some embodiments, the interfacing match component includes a magnetic component, and the magnetic component is positioned directly opposite a Hall device inside the electronic device after the external device successfully interfaces with the electronic device.

In some embodiments, the external device detachably interfaces with the electronic device.

According to a third aspect of the present invention, there is provided a data transmission method including: controlling, after determining that an external device detachably interfaces with the electronic device, transmission of image data between a first communication module of the electronic device and a second communication module of the external device, wherein the image data is collected by an image sensor inside the external device.

In some embodiments, determining that the external device detachably interfaces with the electronic device, includes: determining whether an interfacing signal is detected, wherein the interfacing signal is generated by an interfacing detection module of the electronic device after the electronic device successfully interfaces with the external device; and determining that the external device detachably interfaces with the electronic device in the case that the interfacing signal is detected.

In some embodiments, controlling the transmission of the image data between the first communication module of the electronic device and the second communication module of the external device, includes: generating, after determining that the external device interfaces with the electronic device, a first control signal, wherein the first control signal is configured to perform initialization configuration on the external device; controlling a first communication module of the electronic device to receive image data transmitted from a second communication module of the external device, as a preview image; generating, in response to determining that a capturing operation is detected, a second control signal, wherein the second control signal is configured to control the external device to perform the capturing operation; and controlling the first communication module of the electronic device to receive image data transmitted from the second communication module, as a captured image.

In some embodiments, after determining that the external device detachably interfaces with the electronic device, the method further includes: generating a reverse wireless charging signal, wherein the reverse wireless charging signal is configured to control a wireless module of the electronic device to perform reverse wireless charging.

According to a fourth aspect of the present invention, there is provided a data transmission method including: performing initialization configuration on an image sensor of the external device after determining that the external device detachably interfaces with an electronic device; and obtaining image data collected by the image sensor and sending the image data to the electronic device through a second communication module of the external device.

In some embodiments, performing the initialization configuration on the image sensor of the external device, includes: obtaining local configuration data or a first control signal from the electronic device, wherein the first control signal is configured to configure the image sensor of the external device; and performing the initialization configuration on the image sensor based on the local configuration data or the first control signal.

In some embodiments, the method further includes: obtaining a second control signal from the electronic device, wherein the second control signal is configured to control the external device to capture images; and performing capturing operations based on the second control signal to obtain the image data, and sending the image data to the electronic device through the second communication module.

According to a fifth aspect of the present invention, there is provided a computer program product including computer programs/instructions, which when executed by a processor, cause the method described in either the third or the fourth aspect to be performed.

According to a sixth aspect of the present invention, there is provided a non-transitory computer-readable storage medium that, when executable computer programs in the storage medium are executed by a processor, cause the method as described in either the third or the fourth aspect to be performed.

The technical solutions provided by embodiments of the present invention may include the following beneficial effects.

The electronic device provided in the embodiments includes a processor and a first communication module. The processor is electrically connected to the first communication module. The processor is configured to control, after determining that the external device interfaces with the electronic device, transmission of image data between the first communication module and a second communication module of the external device, the image data being collected by an image sensor inside the external device. In consideration that the high imaging quality of the image sensor inside the external device, according to the present embodiment, high-quality image data can be obtained by interfacing with the external device, achieving the goal of improving the capturing effect. Further, according to the embodiments, the processor of the electronic device has a processing capability higher than that of the external device, which can perform image processing on the above image data, further improving the imaging quality and enhancing the capturing experience.

It should be understood that the general description above and the detailed description in the following are only illustrative and explanatory, and do not limit the present invention.

### BRIEF DESCRIPTION OF THE DRAWINGS

FIGS. 1-14 are block diagrams of an electronic device according to one or more embodiments of the present invention.
FIGS. 15 to 24 are block diagrams of an external device according to one or more embodiments of the present invention.
FIGS. 25 to 27 are schematic diagrams in which an electronic device interfaces with an external device and performs image data transmission according to one or more embodiments of the present invention.
FIG. 28 is a flowchart of a data transmission method according to one or more embodiments of the present invention.
FIG. 29 is a block diagram of an electronic device according to one or more embodiments of the present invention.

### DETAILED DESCRIPTION

Exemplary embodiments will be described in detail herein, examples of which are illustrated in the drawings. When the following description refers to the drawings, the same numerals in different drawings refer to the same or similar elements unless otherwise indicated. The implementations described in the following exemplary embodiments do not represent all implementations consistent with the present invention. Instead, they are merely examples of apparatus and methods consistent with aspects of the invention as detailed in the appended claims.

In order to address the above technical problems, embodiments of the present invention provide a data transmission method, an electronic device, an external device, a program product, and a medium. The inventive concept of the above electronic device lies in that (1) the electronic device detachably interfaces with the external device; (2) a first communication module is added to the electronic device, and the first communication module is configured to communicate with a second communication module of the external device to perform image data transmission. In this way, the electronic device provided in embodiments of the present invention can use the high-quality image sensor inside the external device to obtain the image data without changing its own image sensor, which can improve the capturing effect. In addition, the processing performance of an internal processor of the electronic device is higher than that of the external device, which can process the above image data to obtain higher quality imaging and further improve the capturing experience.

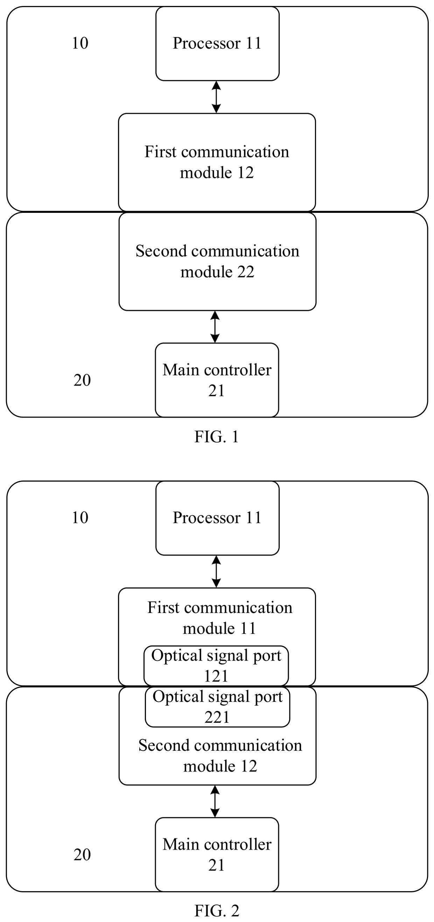

FIG. 1 is a schematic diagram of a structure of an electronic device according to one or more embodiments of the present invention. As shown in FIG. 1, an electronic device 10 includes a housing (not shown in the figure), a processor 11, and a first communication module 12, which are arranged inside the housing. The processor 11 is electrically connected to the communication module 12. The electronic device 10 can detachably interface with an external device 20. After determining that the external device 20 has successfully interfaced with the electronic device 10, the processor 11 can control the first communication module 12 to perform image data transmission with a second communication module 22 of the external device 20. The image data is collected by an image sensor inside the external device 20.

In some embodiments, if the electronic device 10 includes an image sensor and the external device 20 includes an image sensor, then the imaging quality of the image sensor in the external device 20 is higher than the imaging quality of the image sensor in the electronic device 10, or a size of the image sensor in the external device 20 is larger than a size of the image sensor in the electronic device 10. In this way, the external device 20 can collect higher-quality image data, thereby providing higher-quality image data for the electronic device.

In some embodiments, the first communication module 12 is an optical communication module. As shown in FIG. 2, the first communication module 12 includes an optical signal port 121, which enables the high-speed (for example, higher than 10Gbps) image data transmission, ensuring transmission efficiency and capturing experience.

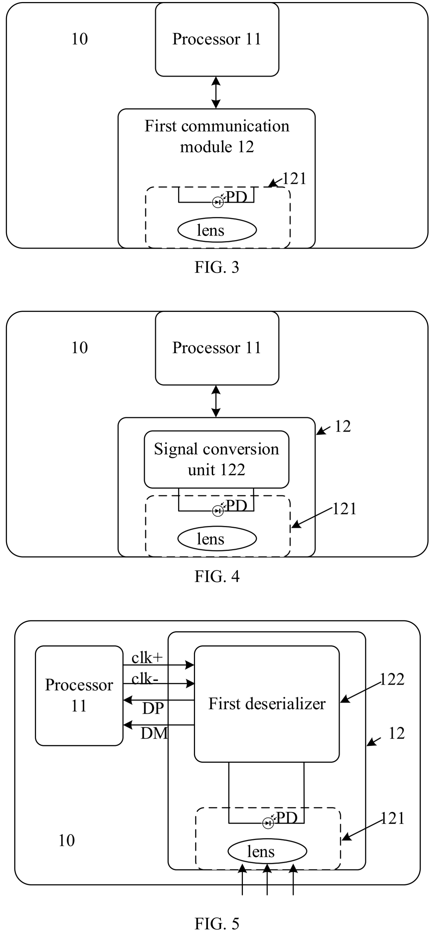

In some embodiments, as shown in FIG. 3, the optical signal port 121 includes a lens and a photosensitive device (PD). The lens is configured to adjust the input ray into a parallel optical signal. The PD is configured to convert the parallel optical signal into an input current signal. In this way, the optical signal port 121 in the embodiment of the present invention can achieve optical communication with the external device 20 to perform the image data transmission, which is conducive to improving the data transmission efficiency and achieving a hole free design for the electronic device, thereby enhancing the aesthetic appearance of the electronic device.

In some embodiments, as shown in FIG. 4, the first communication module 12 further includes a signal conversion unit 122. The signal conversion unit 122 is electrically connected to the optical signal port 121. The signal conversion unit 122 is configured to perform conversion processing on the input current signal output from the optical signal port 121, and send the converted signal to the processor 11. The processor 11 is configured to obtain the image data based on the above converted signal. It can be understood that the signal conversion unit 122 can convert the input current signal into a recognizable converted signal, such as converting the input current signal, i.e. a small current signal, into a converted signal at a preset logic level, thereby improving the signal-to-noise ratio of the data, facilitating subsequent data processing, and enhancing the reliability of the processing results.

In some embodiments, as shown in FIG. 5, the signal conversion unit 122 includes a first deserializer. The first deserializer is electrically connected to the optical signal port 121 and the processor 11, respectively. The first deserializer is configured to deserialize the input current signal and transmit the converted signal obtained to the processor 11. In some examples, the first deserializer is electrically connected to the processor 11 through a data bus. The data bus includes one of the following: an I2C (Inter-Integrated Circuit) bus, an MIPI (Mobile Industry Processor Interface) bus, an SPMI (System Power Management Interface) bus, and an SPI (Seriel Peripheral Interface) bus. Alternatively, the first deserializer is electrically connected to the processor 11 through a high-speed transmission device, which includes either a DDR (Double Data Rate Synchronous Dynamic Random Access Memory) device or a UFS (Universal Flash Storage) device.

In some examples, the first deserializer can be implemented using an optical chip SL. It can be understood that the above input current signal is an analog small current signal, which is processed by the optical chip SL to obtain a digital converted signal. The optical chip SL is electrically connected to the processor 11 through clock lines clk+ and clk-, as well as data lines DP and DM. The optical chip SL synchronizes with the processor 11 through the clock lines clk+ and clk-, and transmits the converted signals to the processor 11 through the data lines DP and DM under the clock synchronization.

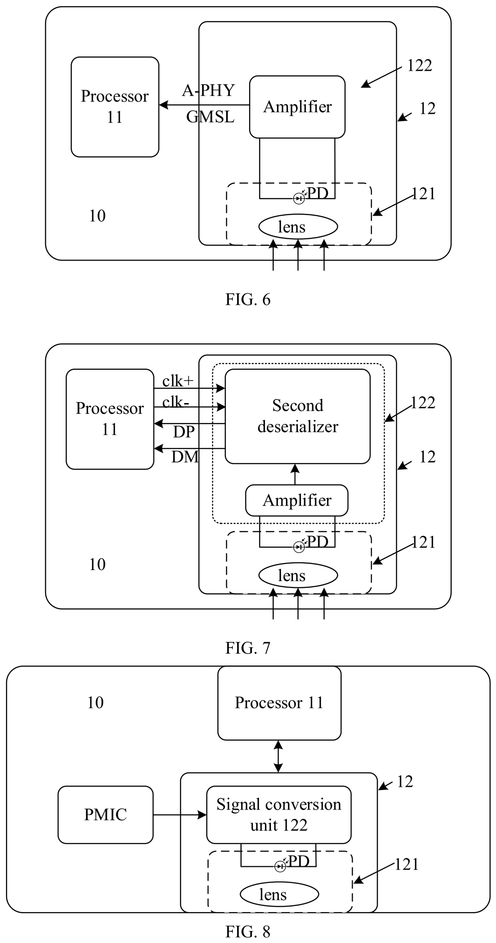

In some embodiments, as shown in FIG. 6, the signal conversion unit 122 includes an amplifier. The amplifier is electrically connected to the optical signal port 121 and the processor 11, respectively. The amplifier is configured to amplify the input current signal and transmit the amplified signal to the processor 11. The processor 11 is configured to obtain the image data based on the amplified signal. In some examples, the amplifier can be implemented using a TIA (Trans-Impedance Amplifier) amplifier, which can convert the input current signal into a voltage signal according to the A-PHY (Automotive Physical Layer) communication protocol or the GMSL (Gigabit Multimedia Serial Link) protocol, and reduce the number of transmission lines by simply transmitting A-PHY signals or GMSL signals. The processing capability of the processor 11 is strong, and the processor 11 can use preset protocols to convert the above converted signals (A-PHY signals or GMSL signals) into image data, so that the processing capability of the processor 11 can be fully utilized.

In some embodiments, as shown in FIG. 7, the signal conversion unit 122 includes an amplifier and a second deserializer. The amplifier is electrically connected to the optical signal port 121 and the second deserializer, respectively. The second deserializer is electrically connected to the processor. The amplifier is configured to amplify the input current signal and transmit the amplified signal to the second deserializer. The second deserializer is configured to deserialize the amplified signal and transmit the converted signal obtained from deserialization to the processor 11. The processor 11 is configured to obtain the image data based on the converted signal. It can be understood that the amplifier can convert the input current signal into the voltage signal and transmit the voltage signal to the second deserializer through a single transmission line, which can reduce the number of transmission lines. The second deserializer can convert the voltage signal into a converted signal such as an MIPI signal, and transmit the MIPI signal to the processor 11 in a similar manner to the first deserializer. In this way, the number of transmission lines between the amplifier and the second deserializer can be reduced, and the processing capability of the second deserializer can be fully utilized, so that the processor 11 only needs to process the converted signal, thereby reducing the requirements for the processing capacity of the processor.

In some embodiments, as shown in FIG. 8, the electronic device further includes a power management module PMIC. The power management module PMIC is configured to supply power to the signal conversion unit 122 and the processor 11. In this way, the normal operations of various components inside the electronic device can be ensured through the power management module PMIC.

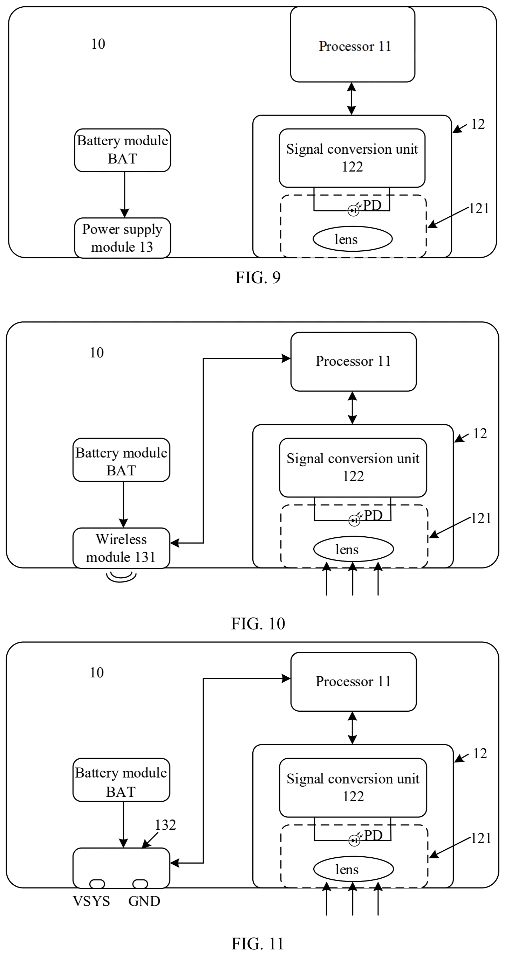

In some embodiments, as shown in FIG. 9, the electronic device 10 further includes a battery module BAT and a power supply module 13. The battery module BAT is electrically connected to the power supply module 13. The power supply module 13 is configured to supply power to the external device 20. In this way, the power supply module 13 can supply power to the external device 20 after the external device 20 successfully interfaces with the electronic device 10, which can reduce the energy consumption of the external device 20 and increase the standby time of the external device 20.

In some embodiments, as shown in FIG. 10, the power supply module 13 includes a wireless module 131, which is configured to wirelessly supply power to the external device 20. For example, the processor 11 can send a reverse wireless charging signal to the wireless module 131 after determining that the external device 20 has successfully interfaced with it. After receiving the above reverse wireless charging signal, the wireless module 131 can perform reverse wireless charging.

In some embodiments, as shown in FIG. 11, the power supply module 13 includes a power interface 132, which includes a positive spring sheet VSYS and a negative spring sheet GND. The power interface 132 is electrically connected to the battery module BAT. The power interface 132 is configured to supply power to the external device 20 after interfacing with a power interface of the external device 20.

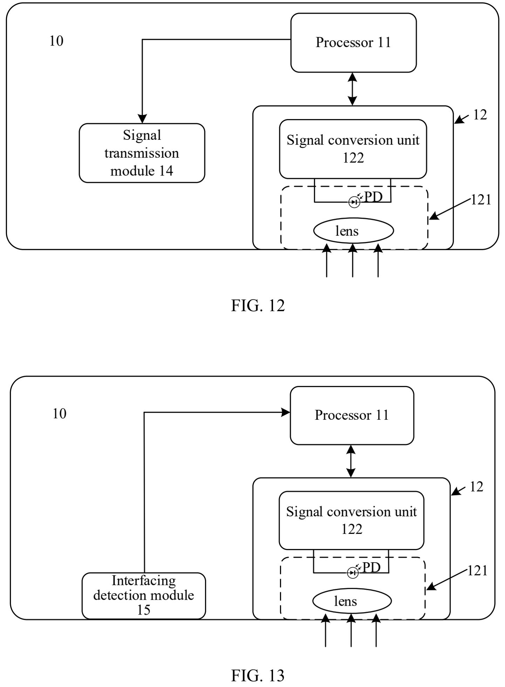

In some embodiments, as shown in FIG. 12, the electronic device 10 further includes a signal transmission module 14. The signal transmission module 14 is electrically connected to the processor 11. The processor 11 is configured to generate a control signal after interfacing with the external device 20, and send the control signal to the signal transmission module 14. The signal transmission module 14 is configured to send the control signal to a signal transmission module of the external device 20.

According to the embodiments, after the electronic device 10 successfully interfaces with the external device 20, the electronic device 10 can generate a control signal. The above control signal can be configuration information, which can configure the capturing parameters of the image sensor of the external device, such as resolution, exposure time, an image size, etc., which is also referred to as a first control signal subsequently. The above control signal can be capturing information, which can control the external device to capture images, such as capturing, recording, etc., which is referred to as a second control signal subsequently. In this way, the control signal can be transmitted by providing the signal transmission module 14 to achieve initialization of the external device (registers), the capturing, and/or the image transmission.

In some examples, the signal transmission module 14 can include a Bluetooth module, a Wi-Fi module, or an NFC (Near Field Communication) module, and when a scheme can achieve the short distance transmission of the control signal, the corresponding scheme can fall within the protection scope of the present invention.

In some embodiments, the above signal transmission module includes a communication interface, which can be implemented using a metal spring sheet, a metal pin, and other ways. The communication interface is configured to interface with a communication interface of the external device 20 and transmit the control signal, which is simple and easy to be implemented.

In some embodiments, as shown in FIG. 13, the electronic device 10 further includes an interfacing detection module 15. The interfacing detection module 15 is electrically connected to the processor 11, and configured to determine whether the external device 20 successfully interfaces with the electronic device 10.

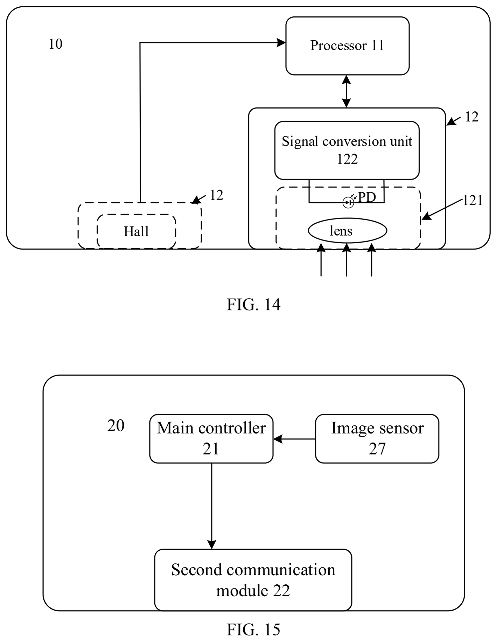

In some examples, as shown in FIG. 14, the interfacing detection module 15 is implemented using a Hall device. The Hall device is configured to generate an interfacing signal after the external device 20 successfully interfaces with the electronic device 10. The above interfacing signal can be a pulse signal, a positive and negative edge signal, a continuous high-level signal, etc., which is then sent to the processor 11. In other examples, the interfacing detection module includes a physical button. After successfully interfacing with the electronic device 10, the external device 20 will press or squeeze the physical button to ground or power the pin of the processor 11, that is, the processor 11 can obtain the interfacing signal. The processor 11 is configured to generate the control signal upon receiving the interfacing signal, which can also generate a reverse wireless charging signal. In this way, by providing the interfacing detection module 15, it is possible to determine whether the external device has successfully interfaced with the electronic device, thereby ensuring the reliable control.

In order to address the above technical problems, embodiments of the present invention also provide an external device. Reference is continued to be made to FIG. 15, an external device 20 includes a main controller 21, a second communication module 22, and an image sensor 27. The main controller 21 is electrically connected to the image sensor 27 and the second communication module 22, respectively. The image sensor 27 is configured to obtain image data and send the image data to the main controller 21. The main controller 21 is configured to control the second communication module 22 to transmit the image data to the first communication module 12 of the electronic device 10.

It should be noted that some modules may be omitted in the drawings of subsequent embodiments, and only the modules described in each embodiment will be shown to simplify the drawings. It can be understood that the omitted modules may be combined into various embodiments without conflict, thereby enriching the solutions of each embodiment.

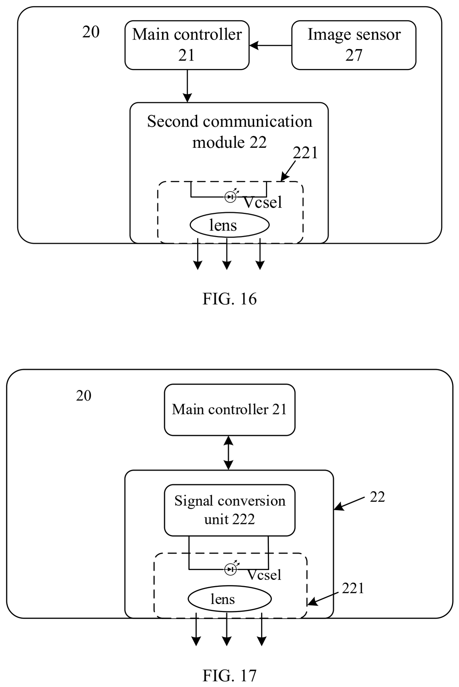

In some embodiments, as shown in FIG. 16, the second communication module 22 includes an optical signal port 221. The optical signal port 221 includes a lens and a photoelectric device Vcsel. The photoelectric device Vcsel is configured to convert a driving signal into an optical signal. The lens is configured to adjust the input optical signal into a parallel optical signal. In this way, by converting the driving signal (electrical signal) into the parallel optical signal, which can be radiated into space, it is convenient for the electronic device to receive the optical signal and achieve the image data transmission.

In some embodiments, as shown in FIG. 17, the second communication module 22 further includes a signal conversion unit 222. The signal conversion unit 222 is electrically connected to the optical signal port 221. The signal conversion unit 222 is configured to convert the image data output by the main controller 21 into a driving signal and send the driving signal to the optical signal port 221. In this way, by providing the signal conversion unit, the conversion of the image data and the driving signal can be achieved, or in other words, a mapping relationship between the image data and the optical signal can be established, which is conducive to achieving the reliable data transmission.

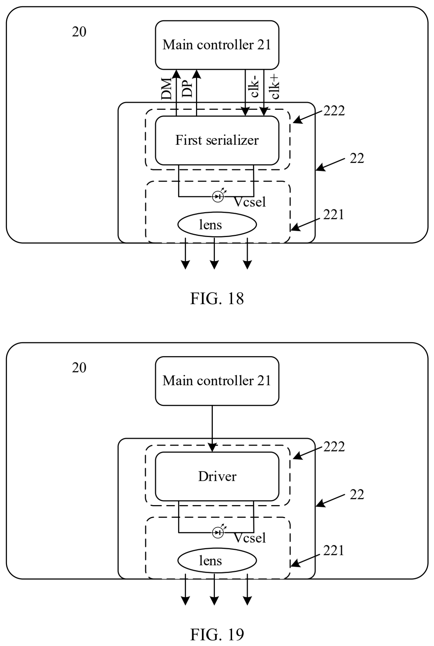

In some embodiments, as shown in FIG. 18, the signal conversion unit 222 includes a first serializer. The first serializer is electrically connected to the optical signal port 221 and the main controller 21, respectively. The main controller 21 is configured to send the image data to the first serializer. The first serializer is configured to convert the image data into a driving signal. In some examples, the first serializer is electrically connected to the main controller 21 through a data bus. The data bus includes one of the following: an I2C bus, an MIPI bus, an SPMI bus, and an SPI bus. Alternatively, the first serializer is electrically connected to the main controller 21 through a high-speed transmission device, which include either a DDR device or a UFS device.

In some examples, the first serializer can be implemented using an optical chip SL. The optical chip SL is electrically connected to the main controller 21 through clock lines clk+ and clk-, as well as data lines DP and DM. The optical chip SL synchronizes with the main controller 21 through the clock lines clk+ and clk-, and the main controller 21 transmits data to the optical chip SL through the data lines DP and DM under the clock synchronization. In this way, the image data can be transmitted at a high speed between the main controller 21 and the optical chip SL.

In some embodiments, as shown in FIG. 19, the signal conversion unit 222 includes a driver. The driver is electrically connected to the optical signal port 221 and the main controller 21, respectively. The driver is configured to convert the image data into a driving signal and transmit the driving signal to the optical signal port 221. In this way, the main controller 21 can process the image data through the A-PHY communication protocol or the GMSL communication protocol, and send an A-PHY signal or a GMSL signal to the optical signal port 221, thereby reducing transmission lines between the main controller 21 and the driver.

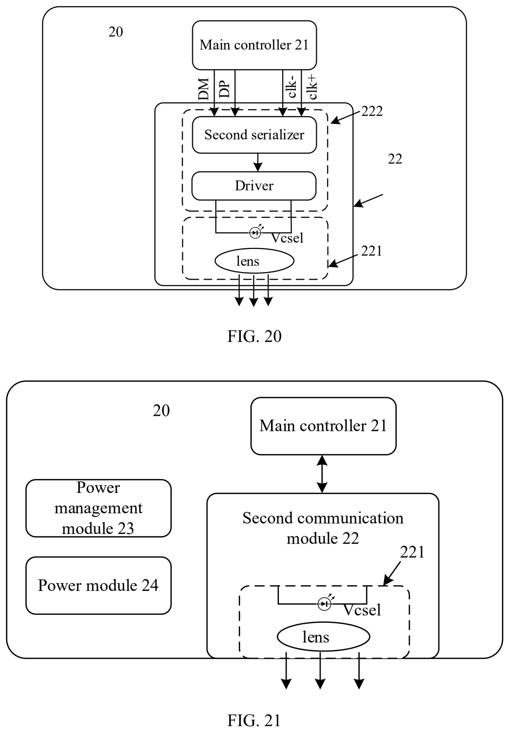

In some embodiments, as shown in FIG. 20, the signal conversion unit 222 includes a driver and a second serializer. The driver is electrically connected to the optical signal port 221 and the second serializer, respectively. The second serializer is electrically connected to the main controller 21. The main controller is configured to send the image data to the second serializer. The second serializer is configured to convert the image data into a serial signal and send the serial signal to the driver. The driver is configured to convert the serial signal into a driving signal. In this way, the high-speed image data is converted into the serial signal by the second serializer, which can reduce the requirements for the processing capability of the main controller 21, and the data transmission between the second serializer and the driver can be achieved using a single transmission line, thereby reducing the number of transmission lines.

In some embodiments, as shown in FIG. 21, the external device further includes a power management module 23, which can supply power to various components inside the external device 20.

In some embodiments, as shown in FIG. 21, the external device further includes a power supply module 24. The power supply module 24 is configured to obtain electrical energy from the electronic device 10 after interfacing with the electronic device 10. In some examples, the above power supply module 24 is a wireless module. After the external device 20 successfully interfaces with the electronic device 10, the wireless module is positioned directly opposite the wireless module of the electronic device, so as to sense the radiation signal from the wireless module of the electronic device and obtain the electrical energy. In this way, the power can be obtained from the electronic device through the wireless power supply, without the need of providing a power supply interface between the electronic device and the external device, which is conducive to achieving hole free designs for both the electronic device and the external device, and improving aesthetics appearances.

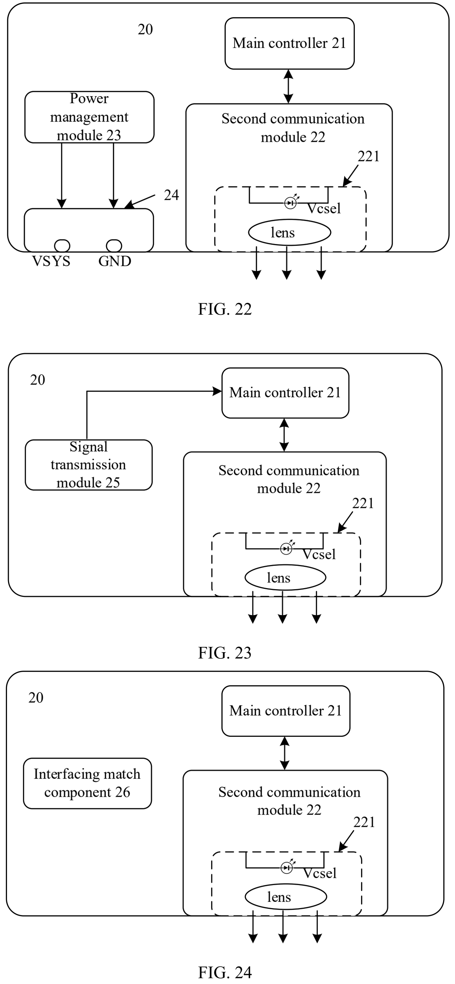

In some embodiments, as shown in FIG. 22, the power supply module includes a power interface, which includes a positive spring sheet VSYS and a negative spring sheet GND. The power interface is electrically connected to the power management module 23. The power interface is configured to obtain the electrical energy after the external device 20 interfaces with the power interface of the electronic device.

In some embodiments, as shown in FIG. 23, the external device 20 further includes a signal transmission module 25. The signal transmission module 25 is electrically connected to the main controller 21. The signal transmission module 25 is configured to obtain a control signal and send the control signal to the main controller 21. The main controller 21 is configured to control the external device and/or configure the external device based on the control signal. The control signal is generated by the processor 11 within the electronic device 10 after successful interfacing.

In some examples, the signal transmission module includes a Bluetooth module, a Wi-Fi module, or an NFC module. In some examples, the signal transmission module 25 includes a communication interface. The communication interface is configured to interface with the communication interface of the electronic device and transmit the control signal. The above communication interface can be implemented through a spring sheet or a pin.

In some embodiments, as shown in FIG. 24, the external device 20 further includes an interfacing match component 26. The interfacing match component 26 is configured to pair with the interfacing detection module inside the electronic device 10, to determine whether the external device has successfully interfaced with the external device 20. In some examples, the interfacing match component 26 includes a magnetic component. After the external device 20 successfully interfaces with the electronic device 10, the magnetic component is positioned directly opposite the Hall device inside the electronic device 10. In this way, the interfacing match component 26 can assist the electronic device in determining whether the interfacing is successful, thereby improving the success rate of the determination result.

Based on the various embodiments of electronic devices and external devices mentioned above, the process of the electronic device interfacing with the external device to perform the image data transmission will be described.

### Example One

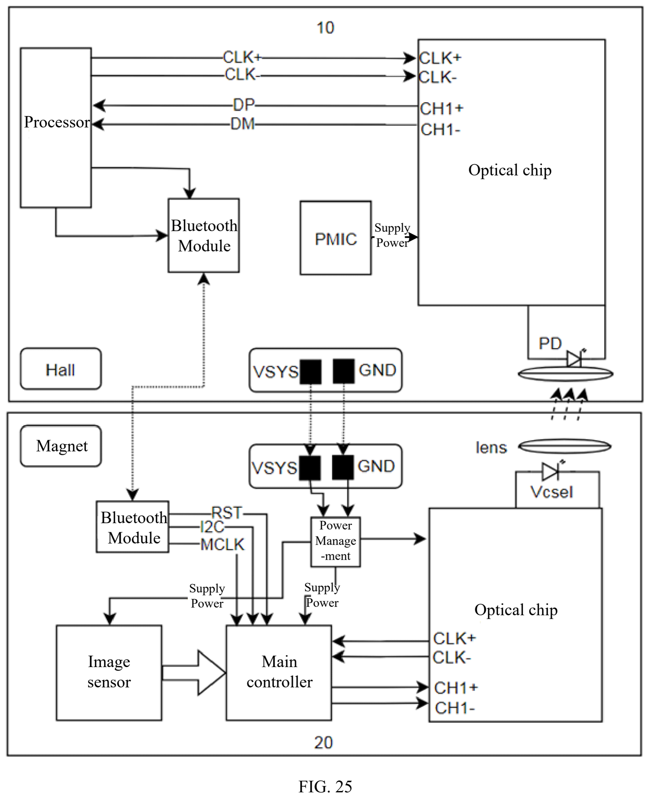

As shown in FIG. 25, after the external device 20 detachably interfaces with the electronic device 10 successfully, the magnet of the external device 20 is directly opposite the Hall device inside the electronic device 10. The Hall device can generate an interfacing signal, such as a pulse signal, and send the interfacing signal to the processor of the electronic device.

After the external device 20 detachably interfaces with the electronic device successfully, the positive spring sheets VSYS and negative spring sheets GND of the power interfaces of the two devices come into elastic contact, respectively, and at the current moment, the electronic device 10 supplies power to the external device 20. After being powered on, the power management module inside the external device 20 supplies power to various components, such as the optical chip, the main controller, the image sensor, the Bluetooth module, etc.

After detecting the interfacing signal, the processor of the electronic device 10 can generate a control signal and send the control signal to the Bluetooth module. The above control signal can be used as a first control signal, which can be the configuration data configured to initialize the capturing parameters, such as the resolution, the frame rate, the image size, the exposure duration, etc., of the external device.

After receiving the control signal, the Bluetooth module of the external device 20 can first output a reset signal to control the register of the external device to reset. Then, the control signal is sent to the main controller through the I2C bus based on the clock signal MCLK, and the main controller initializes the image sensor based on the above control signal.

After the configuration of the image sensor is completed, the image data (RGB data) can be collected and sent to the main controller. The main controller generates an MIPI signal from the image data and sends the MIPI signal to the optical chip. The optical chip converts the MIPI signal into a serial signal and sends the serial signal as a driving signal to the photoelectric device Vcsel. The photoelectric device Vcsel generates an optical signal through turning-on and turning-off according to the driving signal, and the optical signal is adjusted into the parallel optical signal through the lens.

The lens of the electronic device 10 adjusts the optical path of the parallel optical signal, which then reaches the photosensitive device PD. The photosensitive device PD senses the optical signal and converts it into an input current signal, which is then sent to the optical chip, i.e. the first deserializer. The optical chip deserializes the input current signal to obtain a converted signal, which can be MIPI signals. Then, the MIPI signals are transmitted to the processor through data lines DP and DM based on clock signals transmitted on clock lines clk+ and clk-. The processor can display the above image data or perform image processing based on user operations, such as cropping, color grading, etc.

It can be understood that the above image data can be displayed, as a preview image of the electronic device, on the display screen of the electronic device, for users to preview and use.

During the preview process, after detecting the operation that the user needs to take a picture, the electronic device continues to generate the control signal. The control signal, which is the second control signal mentioned above, can control the external device to perform capturing operations. After receiving the second control signal mentioned above, the external device can perform capturing operations and return the image data. The process of returning the image data has been described in the above contents and will not be repeated here. After receiving the above image data, the electronic device can save the image data and display a preset duration, or provide the image data to users for image processing, and so on.

In this way, by converting the image data or MIPI signals into optical signals for transmission, it is possible to quickly connect or disconnect the external device 20 with the electronic device 10, so that the external device can be used as an accessory for the electronic device, which allows for the full utilization of the processing capability of the processor of the electronic device and the large-sized image sensor of the external device, thereby improving the capturing quality.

### Example Two

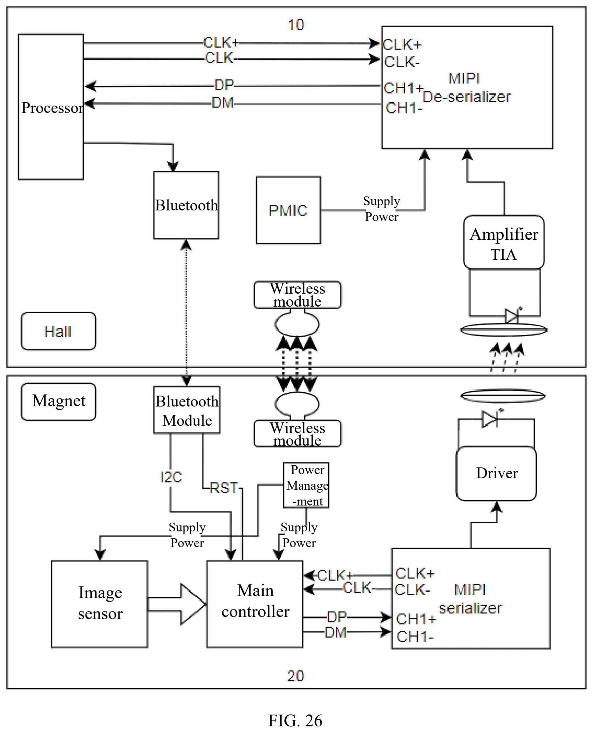

As shown in FIG. 26, the difference between the illustrated solutions in FIG. 26 and FIG. 25 lies in that: (1) the power is supplied to both the electronic device 10 and the external device 20 wirelessly; (2) in the example scheme shown in FIG. 25, the optical chip on the external device side is implemented using a driver and an MIPI serializer chip, while the optical chip on the electronic device side is implemented using an amplifier and an MIPI deserializer chip. The specific contents can refer to the scheme illustrated in FIG. 25, which will not be repeated here.

### Example Three

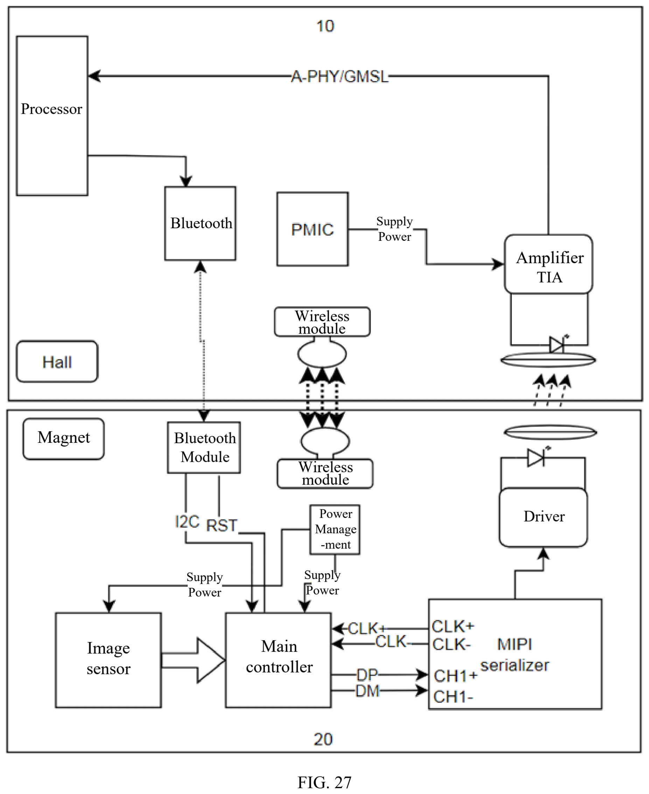

As shown in FIG. 27, the difference between the illustrated solutions in FIG. 27 and FIG. 26 lies in that: (1) the electronic device 10 uses an amplifier to achieve signal conversion, and uses a single transmission line to transmit the converted signal based on A-PHY or GMSL communication protocol to the processor, which can reduce the use of one MIPI serializer chip. After receiving the above converted signal, the processor can restore the MIPI signal. Other contents can refer to solutions illustrated in FIGS. 25 and 26 for details, which will not be repeated here.

Based on the above electronic devices, embodiments of the present invention also provide a data transmission method, which includes following steps.

After determining that the external device detachably interfaces with the electronic device, the first communication module of the electronic device is controlled to perform image data transmission with the second communication module of the external device, and the image data is collected by the image sensor inside the external device.

In some embodiments, the image data transmission is performed with the external device by using the first communication module, which can take advantage of the high imaging performance of the image sensor in the external device to obtain high-quality image data and improve the capturing effect.

In some embodiments, determining that the external device detachably interfaces with the electronic device includes following steps:
whether an interfacing signal is detected is determined, the interfacing signal being generated by the interfacing detection module of the electronic device after the external device successfully interfaces with the electronic device;
if the interfacing signal is detected, it is determined that the external device detachably interfaces with the electronic device.

According to the embodiments, whether the external device successfully interfaces with the electronic device can be determined by determining whether the interfacing signal is received, thereby ensuring the reliable control.

In some embodiments, controlling the first communication module of the electronic device to perform the image data transmission with the second communication module of the external device includes following steps:
after determining that the external device interfaces with the electronic device, a first control signal is generated, the first control signal being configured to perform initialization configuration on the external device;
the first communication module of the electronic device is controlled to receive image data transmitted from the second communication module of the external device, as a preview image;
in response to the detection of a capturing operation, a second control signal is generated, the second control signal being configured to control the external device to perform capturing operations;
the first communication module of the electronic device is controlled to receive image data transmitted from the second communication module, as captured images.

According to the embodiments, by controlling the initialization and the capturing operations of the external device, the electronic device is allowed to collaborate with the external device, to obtain high-quality imaging effects and enhance the capturing experience.

In some embodiments, after determining that the external device detachably interfaces with the electronic device, the method further includes following steps:
a reverse wireless charging signal is generated, the reverse wireless charging signal being configured to control the wireless module of the electronic device to perform reverse wireless charging.

According to the embodiments, the reverse wireless charging can ensure the reliable working of the external device and extend the standby time of the external device.

It should be noted that the data transmission methods provided in the embodiments have been already described in the description of the working process of the electronic device. The data transmission methods can be understood with reference to the above electronic device embodiments, and will not be repeated here.

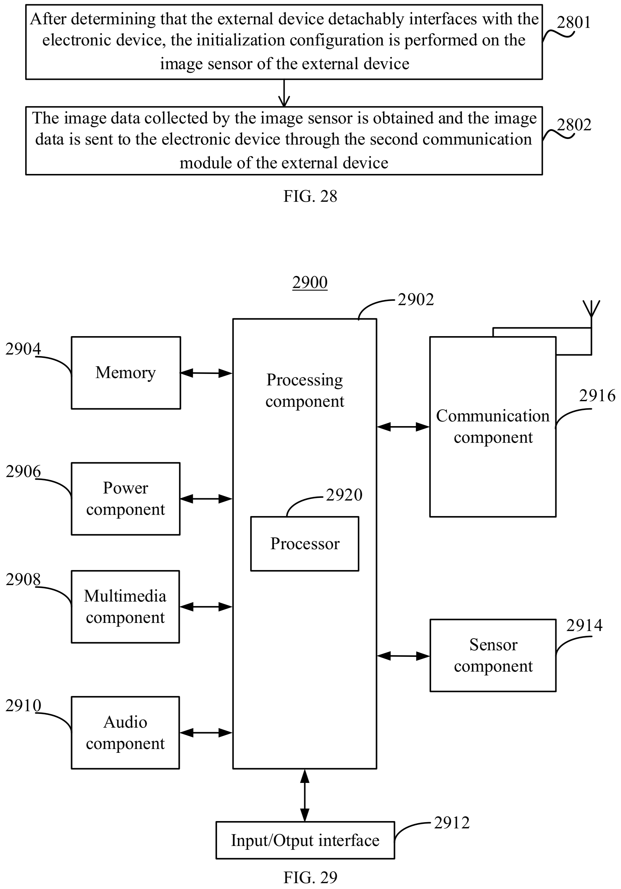

Based on the above external device, embodiments of the present invention also provide a data transmission method. As shown in FIG. 28, the method includes following steps.

In step 2801, after determining that the external device detachably interfaces with the electronic device, the initialization configuration is performed on the image sensor of the external device.

In step 2802, image data collected by the image sensor is obtained and is sent to the electronic device through the second communication module of the external device.

In some embodiments, performing the initialization configuration on the image sensor of the external device includes following steps:
the local configuration data or the first control signal from the electronic device is obtained, the first control signal being configured to configure the image sensor of the external device;
the initialization configuration is performed on the image sensor based on the local configuration data or the first control signal.

In some embodiments, the method further includes following steps:
a second control signal from the electronic device is obtained, the second control signal being configured to control the external device to capture images;
capturing operations are performed based on the second control signal to obtain image data, and the image data is sent to the electronic device through the second communication module.

It should be noted that the data transmission methods provided in the embodiments have been already described in the description of the working process of the external device. The data transmission methods can be understood with reference to the above external device embodiments, and will not be repeated here.

Based on the electronic devices shown in FIGS. 1-14, reference is made to FIG. 29, an electronic device 10 can further include one or more of the following components: a processing component 2902, a memory 2904, a power component 2906, a multimedia component 2908, an audio component 2910, an input/output (I/O) interface 2912, a sensor component 2914, a communication component 2916, and an image capture component 2918.

The processing component 2902 typically controls the overall operation of the electronic device 10, such as operations associated with display, telephone call, data communication, camera operation, and recording operations. The processing component 2902 may include one or more processors 2902 to execute computer programs. In addition, the processing component 2902 may include one or more modules to facilitate interactions between the processing component 2902 and other components. For example, the processing component 2902 may include a multimedia module to facilitate interaction between the multimedia component 2908 and the processing component 2902.

The memory 2904 is configured to store various types of data to support operations in the electronic device 10. Examples of such data include computer programs, contact data, phone book data, messages, pictures, videos, and the like for any application or method operating on the electronic device 10. The memory 2904 can be implemented by any type of volatile or non-volatile storage device or their combination, such as static random access memory (SRAM), electrically erasable programmable read-only memory (EEPROM), erasable programmable read-only memory (EPROM), programmable read-only memory (PROM), read-only memory (ROM), magnetic memory, flash memory, disk or optical disk.

The power component 2906 provides power for various components of the electronic device 10. The power component 2906 may include a power management system, one or more power supplies, and other components associated with generating, managing, and distributing power for the electronic device 10. The power component 2906 may include a power chip, and the controller may communicate with the power chip to control the power chip to turn on or off the first switching device, so that the battery can supply or not supply power to the circuit on the circuit board.

The multimedia component 2908 includes a display screen providing an output interface between the electronic device 10 and the user.

In some embodiments, the screen may include a liquid crystal display (LCD) and a touch panel (TP). If the screen includes a touch panel, the screen can be implemented as a touch screen to receive input signals from the target user. The touch panel includes one or more touch sensors to sense touch, sliding, and gestures on the touch panel. The touch sensor can not only sense the boundaries of touch or sliding actions, but also detect the duration and pressure related to the touch or sliding operation.

The audio component 2910 is configured to output and/or input audio signals. For example, the audio component 2910 includes a microphone (MIC), which is configured to receive an external audio signal when the electronic device 10 is in an operation mode, such as a calling mode, a recording mode, and a voice recognition mode. The received audio signal may be further stored in memory 2904 or transmitted via communication component 616. In some embodiments, the audio component 2910 also includes a speaker for outputting audio document information.

The I/O interface 2912 provides an interface between the processing component 2902 and peripheral interface modules, which can be a keyboard, click wheel, button, etc.

The sensor component 2914 includes one or more sensors for providing various aspects of condition evaluation for the electronic device 10. For example, the sensor component 2914 can detect an open/closed state of the electronic device 10, relative positioning of the components. The component is, for example, a display and a keypad of the electronic device 10. The sensor component 2914 can also detect changes in the position of the electronic device 10 or one component of the electronic device 10, presence or absence of the target user's contact with the electronic device 10, orientation or acceleration/deceleration of the electronic device 10 and temperature change of the electronic device 10. In some examples, the sensor component 2914 may include a magnetic sensor, a gyroscope, and a magnetic field sensor, as well as an inertial sensor, an image sensor, etc. The magnetic field sensor includes at least one of the following: a Hall sensor, a thin film magnetoresistance sensor, a magnetic fluid acceleration sensor, etc.

The communication component 616 is configured to facilitate wired or wireless communication between the electronic device 10 and other devices. The electronic device 10 can access wireless networks based on communication standards, such as Wi-Fi, 4G or 5G, or a combination thereof. In some embodiments, the communication component 616 receives a broadcast signal or broadcast related information from an external broadcast management system via a broadcast channel. In some embodiments, the communication component 616 also includes a near field communication (NFC) module to facilitate short range communication. For example, the NFC module can be implemented based on radio frequency identification (RFID) technology, infrared data association (IrDA) technology, ultra wideband (UWB) technology, Bluetooth (BT) technology and other technologies. In an exemplary embodiment, the communication component 2916 includes the above communication module and/or communication reception module.

In some embodiments, the electronic device 10 can be implemented through one or more application specific integrated circuits (ASICs), digital signal processors (DSPs), digital signal processing devices (DSPDs), programmable logic devices (PLDs), field programmable gate arrays (FPGAs), controllers or other electronic components.

In some embodiments, a computer program product is provided, which includes a computer program/instructions that, when executed by a processor, implements the method described above.

In some embodiments, a non-transitory computer-readable storage medium is provided, and when the executable computer programs in the storage medium are executed by the processor, the method described above is implemented.

After considering the specification and practices of the invention disclosed herein, those skilled in the art will easily come up with other implementation solutions of the present invention. The present invention aims to cover any variations, uses, or adaptive changes of the present invention, which follow the general principles of the present invention and include common knowledge or commonly used technical means in the art that are not disclosed in the present invention. The specification and embodiments are only considered exemplary, and the true scope and spirit of the present invention are defined by appended claims.

It should be understood that the present invention is not limited to the precise structure described above and shown in the drawings, and various modifications and changes can be made without departing from its scope. The scope of the present invention is limited only by the appended claims.

## Claims

1. An electronic device (10), comprising a processor (11) and a first communication module (12), the processor (11) being electrically connected to the first communication module (12);
wherein the processor (11) is configured to control, after determining that an external device (20) detachably interfaces with the electronic device (10), transmission of image data between the first communication module (12) and a second communication module (22) of the external device (20), the image data being collected by an image sensor (27) inside the external device (20).

2. The electronic device (10) according to claim 1, wherein the first communication module (12) comprises an optical signal port (121), the optical signal port (121) comprises a lens and a photosensitive device, the lens is configured to adjust an input ray into a parallel optical signal, and the photosensitive device is configured to convert the parallel optical signal into an input current signal;
optionally wherein the first communication module (12) further comprises a signal conversion unit (122), wherein the signal conversion unit (122) is electrically connected to the optical signal port (121), the signal conversion unit (122) is configured to convert the input current signal output from the optical signal port (121) and send a converted signal to the processor (11), and the processor (11) is configured to obtain the image data based on the converted signal.

3. The electronic device (10) according to claim 2, wherein the signal conversion unit (122) comprises a first deserializer, wherein the first deserializer is electrically connected to the optical signal port (121) and the processor (11) respectively, and the first deserializer is configured to deserialize the input current signal and transmit the converted signal obtained to the processor (11);
optionally wherein the signal conversion unit (122) comprises an amplifier, and wherein the amplifier is electrically connected to the optical signal port (121) and the processor (11) respectively; the amplifier is configured to amplify the input current signal and transmit an amplified signal to the processor (11); and the processor (11) is configured to obtain the image data based on the amplified signal; or
the signal conversion unit (122) comprises an amplifier and a second deserializer, wherein the amplifier is electrically connected to the optical signal port (121) and the second deserializer respectively, and the second deserializer is electrically connected to the processor (11); the amplifier is configured to amplify the input current signal, and transmit the amplified signal to the second deserializer, the second deserializer is configured to deserialize the amplified signal and transmit the converted signal obtained from deserializing to the processor (11); and the processor (11) is configured to obtain the image data based on the converted signal.

4. The electronic device (10) according to any of claims 1 to 3, further comprising a power management module (PMIC) configured to supply power to the signal conversion unit (122) and the processor (11);
optionally wherein the electronic device (10) further comprises a battery module (BAT) and a power supply module (13), wherein the battery module (BAT) is electrically connected to the power supply module (13), and the power supply module (13) is configured to supply power to the external device (20).

5. The electronic device (10) according to claim 4, wherein the power supply module (13) comprises a wireless module (131), and the wireless module (131) is configured to supply power to the external device (20) wirelessly; and/or
wherein the power supply module (13) comprises a power interface (132), wherein the power interface (132) is electrically connected to the battery module (BAT), and the power interface (132) is configured to supply power to the external device (20) after interfacing with a power interface (132) of the external device (20).

6. The electronic device (10) according to any of claims 1 to 5, further comprising a signal transmission module (14) electrically connected to the processor (11);
wherein the processor (11) is configured to generate a control signal after determining that the external device (20) interfaces with the electronic device (10), and send the control signal to the signal transmission module (14); and
wherein the signal transmission module (14) is configured to send the control signal to a signal transmission module (14) of the external device (20);
optionally wherein the signal transmission module (14) comprises a communication interface, and wherein the communication interface is configured to transmit the control signal after interfacing with a communication interface of the external device (20);
optionally wherein the signal transmission module (14) comprises a Bluetooth module, a Wi-Fi module, or an NFC module.

7. The electronic device (10) according to any of claims 1 to 6, further comprising an interfacing detection module (15), wherein the interfacing detection module (15) is electrically connected to the processor (11), and is configured to determine whether the external device (20) successfully interfaces with the electronic device (10).

8. The electronic device (10) according to claim 7, wherein the interfacing detection module (15) comprises a Hall device, wherein the Hall device is configured to generate an interfacing signal after the external device (20) successfully interfaces with the electronic device (10) and send the interfacing signal to the processor (11), and wherein the processor (11) is configured to generate a control signal after determining that the interfacing signal is received; and/or
wherein the interfacing detection module (15) comprises a physical button electrically connected to the processor (11), wherein the physical button is configured to generate a trigger signal after the external device (20) successfully interfaces with the electronic device (10) and send the trigger signal to the processor (11), and wherein the processor (11) is configured to generate a control signal after determining that the trigger signal is received.

9. An external device (20), comprising a main controller (21), an image sensor (27), and a second communication module (22), wherein the main controller (21) is electrically connected to the image sensor (27) and the second communication module (22) respectively;
wherein the image sensor (27) is configured to collect image data and send the image data to the main controller (21); and
wherein the main controller (21) is configured to control transmission of the image data between the second communication module (22) and a first communication module (12) of an electronic device (10).

10. The external device (20) according to claim 9, wherein the second communication module (22) comprises an optical signal port (221), wherein the optical signal port (221) comprises a lens and a photoelectric device (Vcsel), wherein the photoelectric device (Vcsel) is configured to convert a driving signal into an optical signal, and the lens is configured to adjust the optical signal input to the lens into a parallel optical signal;
optionally wherein the second communication module (22) further comprises a signal conversion unit (222), wherein the signal conversion unit (222) is electrically connected to the optical signal port (221), and the signal conversion unit (222) is configured to convert the image data output by the main controller (21) into the driving signal and send the driving signal to the optical signal port (221).

11. The external device (20) according to claim 10, wherein the signal conversion unit (222) comprises a first serializer, the first serializer is electrically connected to the optical signal port (221) and the main controller (21) respectively;
wherein the main controller (21) is configured to send the image data to the first serializer; and
wherein the first serializer is configured to convert the image data into the driving signal;
optionally wherein the signal conversion unit (222) comprises a driver, wherein the driver is electrically connected to the optical signal port (221) and the main controller (21) respectively; and wherein the driver is configured to convert the image data into the driving signal and transmit the driving signal to the optical signal port (221); or
the signal conversion unit (222) comprises a driver and a second serializer, wherein the driver is electrically connected to the optical signal port (221) and the second serializer respectively, and wherein the second serializer is electrically connected to the main controller (21); wherein the main controller (21) is configured to send the image data to the second serializer; wherein the second serializer is configured to convert the image data into a serial signal and send the serial signal to the driver; and wherein the driver is configured to convert the serial signal into the driving signal.

12. The external device (20) according to any of claims 9 to 11, further comprising a signal transmission module (25) electrically connected to the main controller (21);
wherein the signal transmission module (25) is configured to obtain a control signal and send the control signal to the main controller (21); and
wherein the main controller (21) is configured to control the external device (20) and/or configure the external device (20) based on the control signal;
optionally wherein the signal transmission module (25) comprises a communication interface, and wherein the communication interface is configured to receive the control signal after interfacing with a communication interface of the electronic device (10);
optionally wherein the signal transmission module (25) comprises a Bluetooth module, a Wi-Fi module, or an NFC module.

13. The external device (20) according to any of claims 9 to 12, further comprising an interfacing match component (26), wherein the interfacing match component (26) is configured to pair with an interfacing detection module (15) inside the electronic device (10), and is configured to determine whether the external device (20) successfully interfaces with the electronic device (10);
optionally wherein the interfacing match component (26) comprises a magnetic component, and wherein the magnetic component is positioned directly opposite a Hall device inside the electronic device (10) after the external device (20) successfully interfaces with the electronic device (10).

14. A data transmission method, performed by an electronic device (10), the method comprising:
controlling, after determining that an external device (20) detachably interfaces with the electronic device (10), transmission of image data between a first communication module (12) of the electronic device (10) and a second communication module (22) of the external device (20), wherein the image data is collected by an image sensor (27) inside the external device (20).

15. A data transmission method, performed by an external device (20), the method comprising:
performing initialization configuration on an image sensor (27) of the external device (20) after determining that the external device (20) detachably interfaces with an electronic device (10); and
obtaining image data collected by the image sensor (27) and sending the image data to the electronic device (10) through a second communication module (22) of the external device (20).
